# EUROPEAN PATENT APPLICATION

(11) **EP 3 364 386 A1**
(43) Date of publication of application: **22.08.2018**
(21) Application number: 18156666.2
(22) Date of filing: 14.02.2018
(51) Int. Cl.: G07G 1/00

(54) **CHECKOUT APPARATUS AND CHECKOUT METHOD**

(30) Priority: 17.02.2017 JP 2017028129
(71) Applicant: Toshiba TEC Kabushiki Kaisha, Tokyo 141-8562 (JP)
(72) Inventor: Miyagi, Daisuke, Tokyo, 141-8562 (JP)
(74) Representative: Hoffmann Eitle

(57) **Abstract**

According to an embodiment, a checkout apparatus includes a sensor; a reading device; an operation key; and a controller. The controller is configured to identify the product on the basis of read information from the reading device, and execute sales registration processing on the identified product. The controller is further configured to determine, in a case where the operation key receives the settlement operation, whether or not the product is in the predetermined placing area on the basis of detection information from the sensor. Further, the controller is further configured to execute, in a case of determining that no product is in the predetermined placing area, the settlement processing on the product on which the sales registration processing is executed.

## Description

### CROSS-REFERENCE TO RELATED APPLICATIONS

This application is based upon and claims the benefit of priority from the prior Japanese Patent Application No. 2017-028129, filed on February 17, 2016, the entire contents of which are incorporated herein by reference.

### FIELD

An embodiment to be described here generally relates to a checkout apparatus and a checkout method.

### BACKGROUND

In the past, for example, a checkout apparatus and a self-checkout apparatus that relate to sales of products in a shop have been proposed. By using the checkout apparatus, a clerk executes a registration operation for registering a product. By using the self-checkout apparatus, a customer himself/herself executes the registration operation for registering a product.

In such a checkout apparatus, the customer places a basket containing a product on a table. Further, the clerk or the customer takes out the product from the basket, and causes a reading unit to read a symbol such as a barcode attached to the product.

Then, the clerk or the customer places the product whose symbol is read in a plastic shopping bag or a basket set on the opposite table. In this way, the registration operation is executed.

Then, the checkout apparatus executes, on the basis of the read symbol, sales registration processing of the product.

Then, after finishing the registration operation of all of the products, the clerk or the customer executes a settlement operation.

In the case where the settlement operation is executed by the clerk or the customer, the checkout apparatus executes settlement processing on the products on which sales registration processing has been executed.

In such a checkout apparatus, in the case where the clerk or the customer mistakenly executes the settlement operation in spite of the fact that there is still a product in the basket or the table, the sales registration processing is not executed on the product, but the settlement processing is executed on the product.

For this reason, the clerk or the customer who notices the mistake needs to execute the registration operation and the settlement operation on the product on which the sales registration processing is not executed again, which imposes a burden on the clerk or the customer.

### SUMMARY OF THE INVENTION

One of the objects of the present invention is to improve prior art techniques and overcome at least some of the prior art problems as for instance above illustrated.

According to a first aspect of the present invention, it is provided a checkout apparatus, comprising:
a sensor that detects a situation in a predetermined placing area, a product being placed in the predetermined placing area;
a reading device that reads information on the product moved from the predetermined placing area to a predetermined reading range;
an operation key that receives a settlement operation for instructing settlement processing of the product; and
a controller configured to
   identify the product on the basis of read information from the reading device,
   execute sales registration processing on the identified product,
   determine, in a case where the operation key receives the settlement operation, whether or not the product is in the predetermined placing area on the basis of detection information from the sensor, and
   execute, in a case of determining that no product is in the predetermined placing area, the settlement processing on the product on which the sales registration processing is executed.

According to a second aspect of the present invention, it is provided a checkout method for a checkout apparatus including a sensor that detects a situation in a predetermined placing area, a product being placed in the predetermined placing area, a reading device that reads information on the product moved from the predetermined placing area to a predetermined reading range, and an operation key that receives a settlement operation for instructing settlement processing of the product, the checkout method comprising:
identifying the product on the basis of read information from the reading device;
executing sales registration processing on the identified product;
determining, in a case where the operation key receives the settlement operation, whether or not the product is in the predetermined placing area on the basis of detection information from the sensor; and
executing, in a case of determining that no product is in the predetermined placing area, the settlement processing on the product on which the sales registration processing is executed.

### BRIEF DESCRIPTION OF THE DRAWINGS

Fig. 1 is a schematic diagram showing a checkout system according to an embodiment;
Fig. 2 is a perspective view showing a self-POS terminal according to an embodiment;
Fig. 3 is a block diagram showing a hardware configuration of the self-POS terminal;
Fig. 4 is a functional block diagram showing a functional configuration of the self-POS terminal;
Fig. 5 is a flowchart showing flow of control processing in the self-POS terminal.

### DETAILED DESCRIPTION

According to an embodiment, a checkout apparatus includes a sensor, a reading device, an operation key, and a controller.

The sensor detects a situation in a predetermined placing area, a product being placed in the predetermined placing area.

The reading device reads information on the product moved from the predetermined placing area to a predetermined reading range.

The operation key that receives a settlement operation for instructing settlement processing of the product.

The controller is configured to identify the product on the basis of read information from the reading device.

The controller is further configured to execute sales registration processing on the identified product.

The controller is further configured to determine, in a case where the operation key receives the settlement operation, whether or not the product is in the predetermined placing area on the basis of detection information from the sensor.

The controller is further configured to execute, in a case of determining that no product is in the predetermined placing area, the settlement processing on the product on which the sales registration processing is executed.

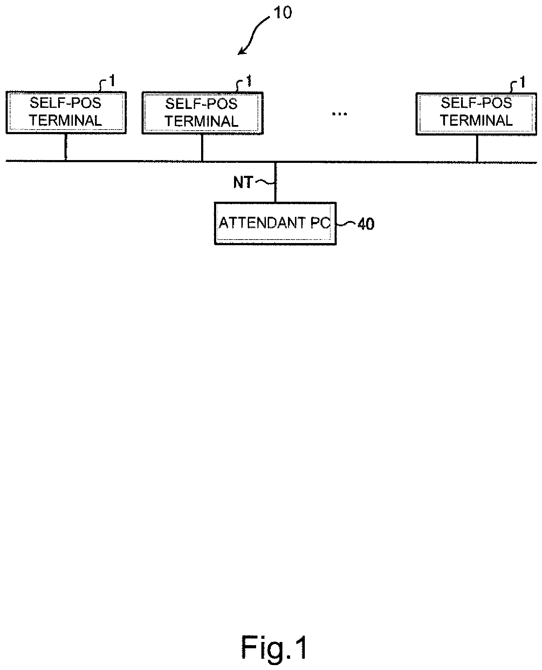

Hereinafter, with reference to Fig. 1 to Fig. 5, a checkout apparatus and a checkout method according to an embodiment will be described in detail. In the drawings, the same reference symbols indicate the same or similar portions.

In this embodiment, a self-POS (Point of Sales) terminal will be described as an example of the checkout apparatus. A customer executes a registration operation and a settlement operation by using the self-POS terminal.

Note that a POS terminal for a clerk to execute sales registration processing and settlement processing may be used as the checkout apparatus.

The checkout apparatus and the checkout method according to this embodiment are not limited by the following description.

Fig. 1 is a schematic diagram showing a checkout system 10 including the self-POS terminal according to this embodiment.

As shown in Fig. 1, the checkout system 10 includes a plurality of self-POS terminals 1 installed in a shop and an attendant PC (Personal Computer) 40.

Each self-POS terminal 1 and the attendant PC 40 are electrically connected to each other via a communication line NT such as a LAN (Local Area Network) line.

The self-POS terminal 1 executes sales registration processing of reading a symbol such as a barcode or a two-dimensional code attached to a product to be purchased and registering product information of the product identified by the read symbol. Further, the self-POS terminal 1 executes the settlement processing on the basis of the registered product information.

A customer executes a sales registration operation of causing the symbol to be read so that the self-POS terminal 1 executes the above-mentioned registration processing.

Further, the customer executes the settlement operation so that the self-POS terminal 1 executes the above-mentioned settlement processing.

The self-POS terminal 1 executes the above-mentioned sales registration processing on the basis of the sales registration operation executed by the customer.

Further, the self-POS terminal 1 executes the above-mentioned settlement processing on the basis of the settlement operation executed by the customer.

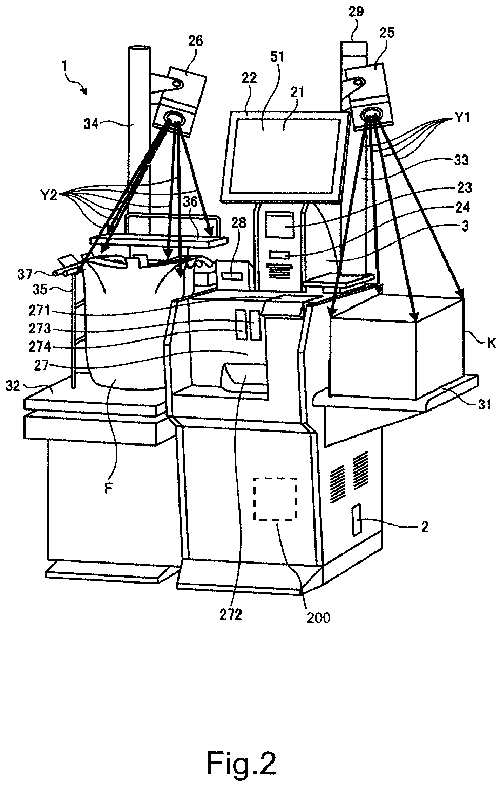

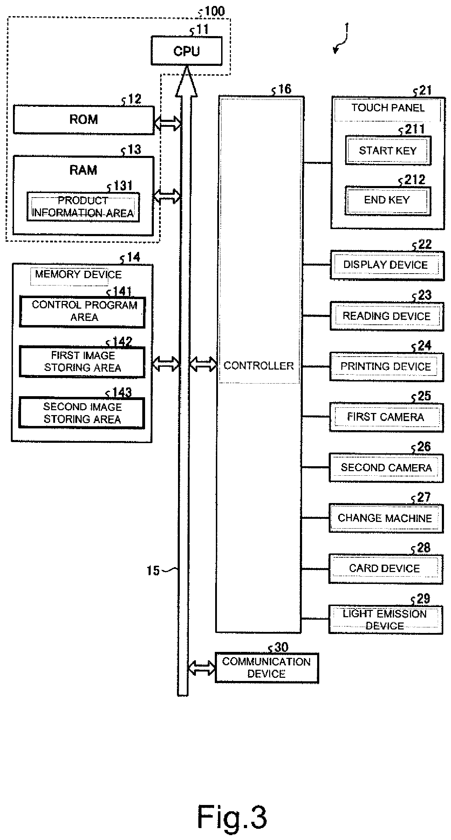

Note that details of the self-POS terminal 1 will be described with reference to Fig. 2 and Fig. 3.

Note that the sales registration processing includes processing of displaying and storing, on the basis of a product code (read information from the reading device to be described later) for identifying the product associated with the read symbol, product information such as a product name and a price of the product.

Further, the settlement processing includes processing of displaying, on the basis of the product information of the product on which the sales registration processing is performed, a total amount and a change amount relating to the transaction with the customer.

Further, the settlement processing includes processing of issuing a receipt.

Note that the self-POS terminal 1 prints product information of the above-mentioned product on which the settlement processing is performed and settlement information (a total amount, a change amount, and the like) on a receipt to be issued.

Each self-POS terminal 1 includes a first sensor 25 and a second sensor 26 (see Fig. 2) that monitor the state of the registration operation and the settlement operation executed by the customer.

The attendant PC 40 displays detection information from the first sensor 25 and the second sensor 26, e.g., video of the registration operation and the settlement operation executed by the customer in each self-POS terminal 1.

An attendant who is the clerk of the shop watches the video displayed on the attendant PC 40 to monitor the registration operation and the settlement operation executed by the customer, and checks the operation mistake and fraud by the customer, for example.

Further, the attendant PC 40 displays the status of the error occurred in the self-POS terminal 1.

Specifically, the attendant PC 40 displays information for identifying the self-POS terminal 1 in which an error has occurred.

Further, the attendant PC 40 displays information for identifying a place where the error has occurred.

Further the attendant PC 40 displays the content of the error.

Fig. 2 is a perspective view showing the self-POS terminal according to this embodiment.

As shown in Fig. 2, the self-POS terminal 1 includes a first housing 2 and a second housing 3.

The first housing 2 houses a change machine 27 (see Fig. 3) that functions as a coin change machine and a bill change machine and a control device 200.

The change machine 27 houses, for each denomination, money deposited from the customer.

Further, the change machine 27 pays out change to the customer. The control device 200 executes control processing of the self-POS terminal 1.

The control device 200 includes a controller 100, a memory device 14, and a communication device 30 in Fig. 3, a power source device (not shown), and the like.

The first housing 2 includes a deposit port 271 and a payout port 272. Through the deposit port 271, a coin is deposited in the change machine 27. Through the payout port 272, a coin is paid out from the change machine 27.

Further, the first housing 2 includes a deposit port 273 and a payout port 274. Through the deposit port 273, a bill is deposited in the change machine 27. Through the payout port 274, a bill is paid out from the change machine 27.

A customer deposits, to the deposit port 271, a coin out of the money to be paid, and deposits, to the deposit port 273, a bill out of the money to be paid.

The self-POS terminal 1 takes the deposited bill in the change machine 27, and houses, for each denomination, the bill in a housing portion of the change machine 27.

Further, the self-POS terminal 1 pays out, from the change machine 27 to the payout port 272, change in the amount of coins out of the change to be paid to the customer.

Further, the self-POS terminal 1 pays out, from the change machine 27 to the payout port 274, change in the amount of bills out of the change to be paid to the customer.

Further, the first housing 2 includes a basket placing table 31 (placing unit) and a plastic-shopping-bag table 32 on the right and left side surfaces.

The basket placing table 31 is provided in a first predetermined placing area to be described later on the right side surface (in the figure) of the first housing 2.

The basket placing table 31 is used as a table for placing a basket K in which a product to be purchased is placed.

The plastic-shopping-bag table 32 is provided in a second predetermined placing area to be described later on the left side surface (in the figure) of the first housing 2.

The plastic-shopping-bag table 32 is used as a table on which a plastic shopping bag F is to be set. In the plastic shopping bag F, a product that is taken out from the basket placing table 31 and subjected to the registration operation is packed.

The plastic shopping bag F in which the product is packed is placed on the plastic-shopping-bag table 32.

The plastic-shopping-bag table 32 includes two supporting columns 35, a temporary table 36, and two extending bars 37 that substantially horizontally extend from the temporary table 36.

The two supporting columns 35 extend upward from the upper surface of the plastic-shopping-bag table 32. The temporary table 36 is formed flat on the upper surface of the supporting columns 35. The two extending bars 37 substantially horizontally extend from the temporary table 36.

The two extending bars 37 are used as bars for hooking the plastic shopping bag F.

The plastic shopping bag F is set on the plastic-shopping-bag table 32 while handles of the plastic shopping bag F is hooked on the two extending bars 37 and opened, which makes it easy to put products in the plastic shopping bag F.

Further, the temporary table 36 is used as a table for temporarily placing a fragile product (tofu or egg) among products whose product codes are read by a reading device 23.

The product placed on the temporary table 36 is packed in the plastic shopping bag F at the end, for example.

The second housing 3 is provided on the upper portion of the first housing 2.

The second housing 3 houses the reading device 23 and a printing device 24.

The reading device 23 includes, for example, a CCD (Charge Coupled Device) sensor (not shown).

The reading device 23 reads information on a product moved from the first predetermined placing area to be described later to a predetermined reading range.

Specifically, the reading device 23 images the product moved from the first predetermined placing area to the predetermined reading range by the CCD sensor to read a symbol (barcode, two-dimensional code, or the like) attached to the product.

The printing device 24 includes, for example, a thermal head. The printing device 24 prints transaction information and settlement information on the product on which the settlement processing is executed, and issues a receipt.

Further, the self-POS terminal 1 includes a card device 28 on the lateral side of the second housing 3 on the upper surface of the first housing 2.

The card device 28 reads customer identification information for identifying a customer from, for example, a credit card inserted in the device.

The self-POS terminal 1 executes the settlement processing on the basis of the customer identification information read by the card device 28.

Further, the second housing 3 includes a display device 22 on the upper portion. The display device 22 displays product information of the product on which the sales registration processing is performed along with the registration operation by a customer.

Further, the display device 22 displays the settlement information along with the settlement operation by the customer.

The display device 22 is located so that a display surface 51 of display device 22 faces the customer operating the self-POS terminal 1.

Further, the display device 22 includes, on the display surface 51, a touch panel 21 that is an operation device.

In the case where the touch panel 21 at the position corresponding to the operation key displayed on the display device 22 is operated, the displayed operation key functions.

Further, the self-POS terminal 1 includes a columnar pole 33 provided behind the second housing 3. The pole 33 extends upward from the upper surface of the first housing 2.

Further, the self-POS terminal 1 includes a light emission device 29.

The light emission device 29 is provided at the upper end portion of the pole 33. The light emission device 29 emits light in the case where an error or the like has occurred and a customer executes an operation of calling an attendant or the like.

The self-POS terminal 1 in which the light emission device 29 has emitted light transmits information such as an error to the attendant PC 40 via the communication device 30 (see Fig. 3).

The attendant PC 40 displays the received information.

The attendant checks the light emission of the light emission device 29 or the information displayed on the attendant PC 40, goes to the corresponding self-POS terminal 1, and takes countermeasures.

Further, the self-POS terminal 1 includes the first sensor 25 provided immediately below the light emission device 29 of the pole 33.

The first sensor 25 detects the situation in the first predetermined placing area surrounded by arrows Y1 shown in Fig. 2. For example, the first sensor 25 detects the presence/absence of a product in the first predetermined placing area. For example, the first sensor 25 detects whether or not a product is moved from the first predetermined placing area.

The first sensor 25 is, for example, a camera. Hereinafter, the first sensor 25 will be referred to as the first camera 25 in some cases.

The first camera 25 images the first predetermined placing area.

That is, the first camera 25 images the basket K placed on the basket placing table 31, and a product put in the basket K.

Further, the first camera 25 images an operation of taking out the product put in the basket K from the basket K by the customer.

Note that the "imaging" used herein represents that the first camera 25 takes a moving image or continuously takes a still image.

The controller 100 (see Fig. 3) to be described later distinguishes and recognizes the product put in the basket K.

As this recognition technology, a well-known technology called "contour extraction" or "edge extraction" is used. In this recognition technology, for example, a place where there is an abrupt change in color and density between an object and another object is recognized as a contour (edge) on the basis of a picked-up image. Further, in this recognition technology, a place where there is an abrupt change in color and density between an object and a background (basket K in this embodiment) is recognized as a contour (edge). Hereinafter, this well-known technology will be referred to as "labelling technology".

The controller 100 recognizes, by continuously recognizing the above-mentioned contour using the above-mentioned labelling technology, an object surrounded by the contour as one product, and distinguishes the product from another product.

Further, the controller 100 determines, by distinguishing the product from the basket K using the above-mentioned labelling technology, whether or not there is a product in the basket K.

Note that the controller 100 may perform distinction between a product and the basket K, distinction between products, and determination of whether or not there is a product is in the basket K, by using a well-known technology other than the above-mentioned labelling technology.

The controller 100 recognizes, by using the above-mentioned labelling technology, that the distinguished product is taken out.

For example, the controller 100 recognizes, at the timing when the recognized product disappears from the moving image or continuous still image picked up by the first camera 25, that the product is taken out.

Further, the self-POS terminal 1 includes a columnar pole 34 that extends upward from the upper surface of the plastic-shopping-bag table 32 behind the plastic-shopping-bag table 32.

The self-POS terminal 1 includes the second sensor 26 provided at the upper end portion of the pole 34.

The second sensor 26 detects the situation in the second predetermined placing area surrounded by arrows Y2 shown in Fig. 2.

The second sensor 26 is, for example, a camera. Hereinafter, the second sensor 26 will be referred to as the second camera 26 in some cases.

The second camera 26 images the second predetermined placing area.

That is, the second camera 26 images the plastic shopping bag F set on the plastic-shopping-bag table 32.

Further, the second camera 26 images a product packed in the plastic shopping bag F.

Further, the second camera 26 images an operation of packing a product in the plastic shopping bag F by the customer. Further, the second camera 26 images a product placed on the temporary table 36.

Also in the case of the product imaged by the second camera 26, the controller 100 recognizes, by using the above-mentioned labelling technology, that the distinguished product is taken out.

The customer places the basket K in which a product on the basket placing table 31.

Next, the customer operates a start key 211 (see Fig. 3) that is one of operation keys displayed on the display device 22. The operation key includes an end key and the like in addition to the start key 211.

Then, the self-POS terminal 1 is allowed to receive the registration operation to be described later by the customer.

The first camera 25 images the product put in the basket K placed on the basket placing table 31.

Next, the customer takes out one product from the placed basket K.

At this time, the first camera 25 images the operation of taking out the product from the basket K by the customer.

Then, the customer causes the taken-out product to pass through a predetermined reading range in front of the reading device 23.

The reading device 23 images the product passing through the predetermined reading range.

The self-POS terminal 1 identifies a product on the basis of read information from the reading device 23, i.e., an image of the imaged product, and executes the sales registration processing on the product.

Next, the customer puts the product that has passed through the predetermined reading range in the plastic shopping bag F.

The second camera 26 images the operation of putting the product in the plastic shopping bag F by the customer.

The series of operations from taking out the product to putting the product in the plastic shopping bag F by the customer is referred to as the registration operation.

In the case of finishing the registration operation on all of the products put in the basket K, the customer operates (settlement operation) an end key 212 (see Fig. 3).

The end key 212 is an operation key that is displayed on the display device 22 and receives the settlement operation for instructing the settlement processing of products as will be described later.

The operation of the end key 212 by the customer is included in the settlement operation.

In the case where the end key 212 is operated, the self-POS terminal 1 displays the total amount of the products on which the sales registration processing is executed on the display device 22.

The customer deposits, in the self-POS terminal 1, a bill or a coin in an amount corresponding to the displayed total amount or more.

Specifically, the customer deposits a coin from the deposit port 271, and a bill from the deposit port 273.

Hereinafter, a hardware configuration of the self-POS terminal 1 will be described.

Fig. 3 is a block diagram showing a hardware configuration of the self-POS terminal 1.

As shown in Fig. 3, the self-POS terminal 1 includes the controller 100. The controller 100 includes a processor 11, a ROM (Read Only Memory) 12, a RAM (Random Access Memory) 13, a memory unit 14, and the like.

The processor 11 is, for example, a CPU (Central Processing Unit). Hereinafter, the processor 11 will be referred to as the CPU 11. The CPU functions as a control subject.

The ROM 12 stores various programs.

The RAM 13 develops various types of data.

The memory device 14 stores various programs.

The CPU 11, the ROM 12, the RAM 13, and the memory device 14 are connected to each other via a data bus 15.

That is, the CPU 11 of the controller 100 executes control processing to be described later by operating in accordance with a control program that is stored in the ROM 12 and the memory device 14 and loaded into the RAM 13.

The RAM 13 includes a product information area 131 in which product information of a product on which the sales registration processing is executed is to be stored.

The memory device 14 includes an HDD (Hard Disc Drive) or a non-volatile memory such as a flash memory in which stored information is retained even when the power is turned off. The memory device 14 includes a control program area 141 for storing a control program.

Further, the memory device 14 includes a first image storing area 142 and a second image storing area 143.

The first image storing area 142 stores an image picked up by the first camera 25.

The second image storing area 143 stores an image picked up by the second camera 26.

Further, the controller 100 is connected to the touch panel 21 that is an operation device, the display device 22, the reading device 23, the printing device 24, the first camera 25, the second camera 26, the change machine 27, the card device 28, and the light emission device 29 via the data bus 15 and a controller 16.

The touch panel 21 includes the start key 211 at a position corresponding to the graphic of a "start key" displayed on the display device 22.

The touch panel 21 includes the end key 212 at a position corresponding to the graphic of an "end key" displayed on the display device 22.

Note that in the following, "the key provided on the touch panel 21 corresponding to the display of the keys of the display device 22" will be briefly described as "key displayed on the display device 22", for example.

The start key 211 is an operation key that receives the registration operation for instructing the sales registration processing of a product. A customer operates the start key 211 in the case of starting the registration operation in the self-POS terminal 1.

The end key 212 is an operation key that receives the settlement operation for instructing the settlement processing of the product on which the sales registration processing is executed. The customer operates the end key 212 in the case of finishing the sales registration operation and shifting to the settlement processing in the self-POS terminal 1.

The display device 22 includes, for example, a liquid crystal panel.

The display device 22 displays a still image or a moving image picked up by the first camera 25 and the second camera 26.

The first camera 25 and the second camera 26 each include a CCD image sensor (not shown).

The first camera 25 and the second camera 26 picks up an image by using the respective CCD image sensors.

Further, the controller 100 is connected to the communication device 30 via the data bus 15.

The communication device 30 is connected to another self-POS terminal 1 and the attendant PC 40 via the communication line NT.

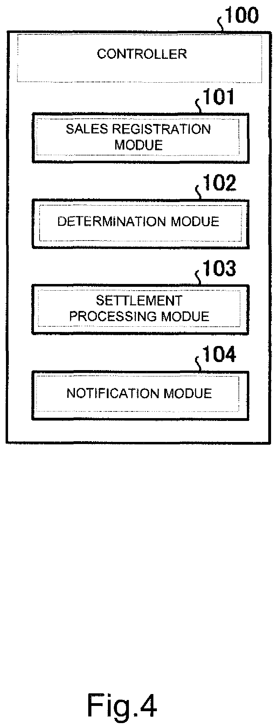

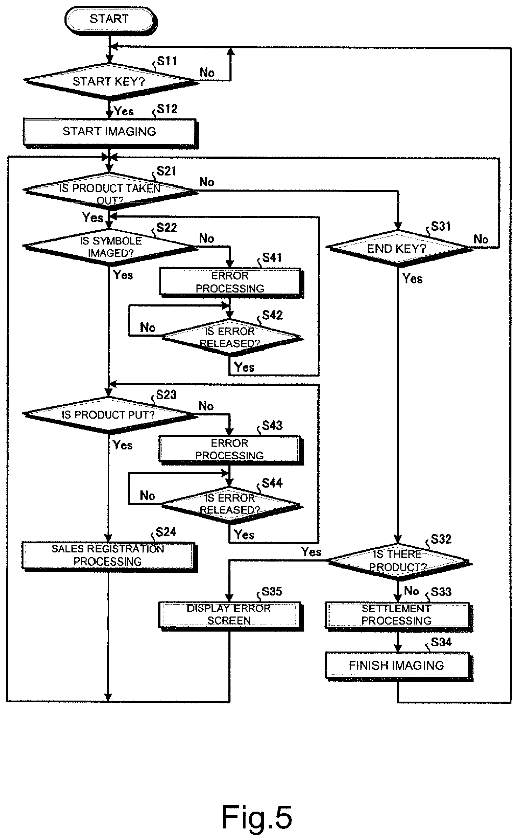

Hereinafter, control of the self-POS terminal 1 will be described with reference to Fig. 4 and Fig. 5.

Fig. 4 is a functional block diagram showing a functional configuration of the self-POS terminal 1.

The controller 100 functions as a sales registration module 101, a determination module 102, a settlement processing module 103, and a notification module 104 in accordance with the control program stored in the ROM 12 and the control program area 141 of the memory device 14.

The sales registration module 101 has a function of executing the sales registration processing on a product placed on the basket placing table 31.

The determination module 102 has a function of determining whether or not a product is placed on the basket placing table 31 under the condition that the settlement operation for instructing the settlement processing relating to the product on which the sales registration processing is executed is executed.

The settlement processing module 103 has a function of executing the settlement processing on the product on which the sales registration processing is executed under the condition that the determination module 102 determines that no product is placed on the basket placing table 31.

The notification module 104 has a function of notifying information relating to avoiding to execute the settlement processing in the case where the settlement processing module 103 avoids to execute the settlement processing under the condition that a product is placed on the basket placing table 31.

Fig. 5 is a flowchart showing flow of control processing by the self-POS terminal 1.

A customer puts, in the basket K, a product to be purchased among products displayed in a shop.

The customer who finishes shopping places the basket K containing the product the product on the basket placing table 31.

Then, the customer operates the start key 211 displayed on the display device 22.

In Step S11 shown in Fig. 5, the controller 100 determines whether or not the start key 211 is operated.

The controller 100 stands by until the start key 211 is operated (No in Step S11). In the case where the controller 100 determines that the start key 211 is operated (Yes in Step S11), the processing of the controller 100 proceeds to Step S12.

In Step S12, the controller 100 starts imaging by the first camera 25 and the second camera 26.

That is, the first camera 25 starts imaging the basket K placed on the basket placing table 31 and products put in the basket K.

Further, the first camera 25 images the state where a product is to be taken out from the basket K.

Then, the controller 100 stores an image picked up by the first camera 25 in the first image storing area 142.

Further, the second camera 26 images the plastic shopping bag F set on the plastic-shopping-bag table 32 and products put in the plastic shopping bag F.

Further, the second camera 26 images the state where a product is to be put in the plastic shopping bag F.

Further, the second camera 26 images a product placed on the temporary table 36.

Then, the controller 100 stores an image picked up by the second camera 26 in the second image storing area 143.

Next, in Step S21, the controller 100 determines whether or not a product is moved from the basket K. Specifically, the controller 100 determines whether or not a product is taken out from the basket K.

In the case where the controller 100 determines that a product is not taken out from the basket K (No in Step S21), the processing of the controller 100 proceeds to Step S31 to be descried later.

In the case where the controller 100 determines in Step S31 that the end key 212 is not operated (No in Step S31), the processing of the controller 100 returns to Step S21 (standby routine).

In the case where a product recognized by using the above-mentioned labelling technology in the image that is picked up by the first camera 25 and stored in the first image storing area 142 is moved from the basket K in the above-mentioned Step S21, the controller 100 determines that a product is taken out from the basket K.

In the case where the controller 100 determines that a product is taken out from the basket K (Yes in Step S21), the processing of the controller 100 proceeds to Step S22.

In Step S22, the controller 100 determines whether or not a symbol attached to the product is imaged (i.e., symbol is read) by the reading device 23.

In the case where the controller 100 determines that a symbol is imaged (Yes in Step S22), the processing of the controller 100 proceeds to Step S23.

In Step S23, the controller 100 determines whether or not the product is put in the plastic shopping bag F.

That is, in the case where a product recognized by using the above-mentioned labelling technology in the image that is picked up by the second camera 26 and stored in the second image storing area 143 is moved from the outside to the plastic shopping bag F after determining that a symbol is imaged in the above-mentioned Step S22, the controller 100 determines that a product is put in the plastic shopping bag F.

In the case where the controller 100 determines that a product is put in the plastic shopping bag F (Yes in Step S23), the processing of the controller 100 proceeds to Step S24.

In Step S24, the controller 100 (sales registration module 101) executes the sales registration processing on the product on the basis of the symbol determined to have been imaged in the above-mentioned Step S22.

That is, the controller 100 acquires a corresponding product code on the basis of the imaged symbol.

Then, the controller 100 reads product information (product name, price, and the like) of the product from a product master (not shown) on the basis of the acquired product code.

Then, the controller 100 stores the read product information in the product information area 131.

Note that the product code may be information recorded in the symbol. Further, the product code may be stored in, for example, a memory in the self-POS terminal 1 in association with the symbol, and acquired by being read from the memory.

Note that the product code is information for identifying a product.

Then, after the controller 100 stores the product information in the product information area 131 in the above-mentioned Step S24, the processing of the controller 100 returns to Step S21.

Meanwhile, in the case where the controller 100 determines in the above-mentioned Step S22 that no symbol is imaged (No in Step S22) in spite of the fact that the controller 100 determines in the above-mentioned Step S21 that a product is taken out from the basket K (Yes in Step S21), the processing of the controller 100 proceeds to Step S41.

In Step S41, the controller 100 displays an error message on the display device 22.

The message in Step S41 in this case is a message for allowing the customer to pass the product over the reading device 23 again to cause the reading device 23 to read the symbol.

For example, the display device 22 displays a message such as "Please pass the product over the reading device" and "Please pass the product over the reading device with the surface to which the bar code is attached facing the reading device".

Then, in Step S42, the controller 100 determines whether or not the error is released.

Specifically, the controller 100 determines that the error is released in the case where an error release key (not shown) displayed on the display device 22 with the message is operated.

The controller 100 stands by until the error is released (No in Step S42).

In the case where the controller 100 determines that the error is released (Yes in Step S42), the processing of the controller 100 returns to Step S22.

Further, in the case where the controller 100 determines in the above-mentioned Step S23 that no product is put in the plastic shopping bag F (No in step S23) in spite of the fact that a symbol is imaged in the above-mentioned Step S22 (Yes in Step S22), the processing of the controller 100 proceeds to Step S43.

In Step S43, the controller 100 displays an error message on the display device 22.

The message in Step S43 in this case is a message for allowing the customer to put the product in the plastic shopping bag F.

For example, the display device 22 displays a message such as "Please put the product in the plastic shopping bag".

Then, in Step S44, the controller 100 determines whether or not the error is released.

Specifically, the controller 100 determines that the error is released in the case where an error release key (not shown) displayed on the display device 22 with the message is operated.

The controller 100 stands by until the error is released (No in Step S44).

In the case where the controller 100 determines that the error is released (Yes in Step S44), the processing of the controller 100 returns to Step S23.

Note that in the above-mentioned Step S23, the controller 100 determines that a product is put in the plastic shopping bag F (Yes in Step S23) in the case where the second camera 26 images a product placed on the temporary table 36.

Meanwhile, in the case where the controller 100 determines in Step S21 that no product is taken out from the basket K (No in Step S21), the processing of the controller 100 proceeds to Step S31.

In Step S31, the controller 100 determines whether or not the end key 212 is operated (settlement operation).

In the case where the controller 100 determines that the end key 212 is operated (Yes in Step S31), the processing of the controller 100 proceeds to Step S32.

In Step S32, the controller 100 (determination module 102) determines whether or not a product is put in the basket K placed on the basket placing table 31 (i.e., whether or not a product is placed on the basket placing table 31).

In this case, the controller 100 determines, on the basis of an image that is picked up by the first camera 25 immediately before or immediately after determining in the above-mentioned Step S31 that the end key is operated (Yes in Step S31), and stored in the first image storing area 142, that whether or not a product is put in the basket K placed on the basket placing table 31.

In the case where the controller 100 determines that no product is put in the basket K (i.e., no product is placed on the basket placing table 31) (No in Step S32), the processing of the controller 100 proceeds to Step S33.

In Step S33, the controller 100 (settlement processing module 103) executes the settlement processing on the basis of the product information stored in the product information area 131.

That is, the controller 100 calculates the total amount of products obtained by summing up the prices of products among the product information stored in the product information area 131.

Then, the controller 100 calculates a tax amount to be taxed on the calculated total amount. Further, the controller 100 calculates a payment amount of the customer obtained by summing up the calculated total amount and the calculated tax amount.

Then, the controller 100 displays the total amount, the tax amount, and the payment amount on the display device 22.

The customer deposits money more than the payment amount to the self-POS terminal 1 on the basis of the displayed payment amount.

The deposit is made through the deposit port 273 (deposit of bills) and the deposit port 271 (deposit of coins).

In the case of determining that the customer deposits money more than the payment amount, the controller 100 calculates a change amount obtained by subtracting the payment amount from the deposit amount, and displays the change amount on the display device 22.

Then, the controller 100 issues, from the printing device 24, a receipt on which the product information stored in the product information area 131, the total amount, the tax amount, the payment amount, the change amount, and the like are printed.

The above-mentioned processing including this processing is included in the settlement processing.

Next, in Step S34, the controller 100 finishes the imaging by the first camera 25 and the second camera 26.

Then, the processing of the controller 100 returns to Step S11.

That is, the controller 100 determines in the above-mentioned Step S31 that the end key 212 is operated (Yes in Step S31).

Next, in the case of determining in the above-mentioned Step S32 that no product is put in the basket K (No in Step S32), the controller 100 executes the settlement processing relating to this transaction.

Note that in the case where the controller 100 determines in the above-mentioned Step S31 that the end key 212 is not operated (No in Step S31), the processing of the controller 100 returns to Step S21.

Further, in the case where the controller 100 determines in the above-mentioned Step S32 that a product is put in the basket K (i.e., a product is placed on the basket placing table 31) (Yes in Step S32), the processing of the controller 100 proceeds to Step S35.

In Step S35, the controller 100 (notification module 104) displays an error message on the display device 22.

That is, the controller 100 displays, on the display device 22, a message indicating that there is still a product in the basket K. The message allows the customer to take out the product and pass the taken-out product through the front (predetermined reading range) of the reading device 23 to cause the reading device 23 to read the symbol.

For example, the display device 22 displays a message such as "There is still an unregistered product in the basket. Please let it read the barcode of the product".

Then, the processing of the controller 100 returns to Step S21.

That is, in the case of determining in the above-mentioned Step S31 that the end key 212 is operated (Yes in Step S31) and then determining in the above-mentioned Step S32 that a product is put in the basket K (Yes in Step S32), the controller 100 avoids to execute the settlement processing relating to the transaction.

Then, the controller 100 displays the above-mentioned message (see Step S35) in connection with avoiding to execute the settlement processing in the above-mentioned Step S35.

In this case, the processing of the controller 100 returns to Step S21.

In the above-mentioned Step S21, the controller 100 stands by until the customer executes the registration operation on the product put in the basket K.

In this state, on the product put in the basket K, the customer can execute the registration operation.

In the case where the customer executes the registration operation, the controller 100 executes the processing of Step S22 and subsequent Steps on the product on which the registration operation is executed.

In the case where the sales registration processing is executed on all of the products put in the basket K the processing of the controller 100 proceeds to Step S31.

In Step S31, the controller 100 determines whether or not the end key 212 is operated, again.

In the case where the controller 100 determines that the end key 212 is operated (Yes in Step S31), the processing of the controller 100 proceeds to Step S32.

In Step S32, the controller 100 determines whether or not a product is put in the basket K placed on the basket placing table 31 (i.e., there is a product), again.

In the case where the controller 100 determines that no product is put in the basket K (No in Step S32), the processing of the controller 100 proceeds to Step S33.

In Step S33, the controller 100 executes the settlement processing on the basis of the product information stored in the product information area 131.

According to such an embodiment, the controller 100 executes the settlement processing in the case where no product is placed on the basket placing table 31.

Therefore, even in the case where a customer executes the settlement operation while a product is placed on the basket placing table 31, the customer does not need to execute the registration operation and the settlement operation again.

Note that in this embodiment, the controller 100 (determination module 102) determines, on the basis of the image picked up by the first camera 25 that is the first sensor 25, whether or not a product is put in the basket K (i.e., whether or not a product is placed on the basket placing table 31).

However, the above-mentioned first sensor is not limited to a camera. For example, the above-mentioned first sensor may be a scale foe measuring the weight of a product, which is provided on the basket placing table 31.

Then, the controller 100 (determination module 102) may determine whether or not a product is put in the basket K (i.e., whether or not a product is placed on the basket placing table 31) depending on whether or not the scale measures the weight of products puts in the basket K.

Further, in this embodiment, the controller 100 (determination module 102) determines whether or not there is a product in the basket K.

However the determination is not limited to this embodiment. For example, the controller 100 (determination module 102) may determine whether or not a product is directly placed on the basket placing table 31.

Further, in this embodiment, the controller 100 receives an input of a product code by imaging a code attached to a product by using the reading device 23 in order to identify a product.

However, the above-mentioned identification of a product is not limited to this embodiment. For example, the controller 100 may identify the product on the basis of an image of the product by using a generic object recognition technology.

Further, in this embodiment, the controller 100 (notification module 104) displays an error message on the display device 22 as in the processing of Step S35, as an example. However, the above-mentioned notification processing is not limited to this embodiment. For example, the controller 100 (notification module 104) may notify the customer by voice.

Further, in this embodiment, the self-POS terminal 1 has been described as an example of the checkout apparatus. However, the checkout apparatus is not limited to the self-POS terminal 1. The checkout apparatus may be a POS terminal that a clerk executes the registration operation and the settlement operation.

Note that the program executed by the self-POS terminal 1 according to this embodiment is recorded in an installable format file or an executable format file in a computer readable recording medium such as a CD-ROM, a flexible disk (FD), a CD-R, and a DVD (Digital Versatile Disk) and provided.

Further, the program executed by the self-POS terminal 1 according to this embodiment may be stored in a computer connected to a network such as the Internet, downloaded via the network, and provided. Further, the program executed by the self-POS terminal 1 according to this embodiment may be provided or distributed via a network such as the Internet.

Further, the program executed by the self-POS terminal 1 according to this embodiment may be preinstalled in the ROM or the like and provided.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A checkout apparatus, comprising:
a sensor that detects a situation in a predetermined placing area, a product being placed in the predetermined placing area;
a reading device that reads information on the product moved from the predetermined placing area to a predetermined reading range;
an operation key that receives a settlement operation for instructing settlement processing of the product; and
a controller configured to
identify the product on the basis of read information from the reading device,
execute sales registration processing on the identified product,
determine, in a case where the operation key receives the settlement operation, whether or not the product is in the predetermined placing area on the basis of detection information from the sensor, and
execute, in a case of determining that no product is in the predetermined placing area, the settlement processing on the product on which the sales registration processing is executed.

2. The checkout apparatus according to claim 1, further comprising
a table provided in the predetermined placing area, the product being placed on the table, wherein
the sensor detects whether or not there is the product on the table, and
the reading device reads information on the product moved from the table to the predetermined reading range.

3. The checkout apparatus according to claim 1 or 2, wherein
the controller is further configured to
determine, on the basis of the detection information from the sensor, whether or not the product is moved to outside of the predetermined placing area,
identify, in a case of determining that the product is moved to the outside of the predetermined placing area, the product on the basis of the read information from the reading device, and
execute the sales registration processing on the identified product.

4. The checkout apparatus according to any of claims 1 to 3, wherein
the controller is further configured to determine, in a case of determining that no product is moved to outside of the predetermined placing area, whether or not the operation key receives the settlement operation.

5. The checkout apparatus according to any of claims 1 to 4, wherein
the controller is further configured to, in a case of determining that there is the product in the predetermined placing area after determining that the operation key receives the settlement operation,
avoid to execute the settlement processing, and
notify information relating to avoiding to execute the settlement processing.

6. The checkout apparatus according to claim 5, wherein
the controller is further configured to, in a case of avoiding to execute the settlement processing,
identify the product on the basis of the read information from the reading device, and
execute the sales registration processing on the identified product.

7. The checkout apparatus according to claim 6, wherein
the controller is further configured to
determine, after determining that there is the product in the predetermined placing area, whether or not the operation key receives the settlement operation,
determine, in a case of determining that the operation key receives the settlement operation, whether or not there is the product in the predetermined placing area, and
execute, in a case of determining that there is no product in the predetermined placing area, the settlement processing.

8. The checkout apparatus according to any of claims 1 to 7, wherein
the sensor includes a camera that images the predetermined placing area, and
the controller is further configured to determine, on the basis of an image picked up by the camera, whether or not there is the product in the predetermined placing area.

9. The checkout apparatus according to any of claims 2 to 8, wherein
the sensor includes a scale provided on the table, the scale measuring a weight of the product placed on the table, and
the controller is further configured to determine, on the basis of measurement information from the scale, whether or not there is the product on the table.

10. A checkout method for a checkout apparatus including a sensor that detects a situation in a predetermined placing area, a product being placed in the predetermined placing area, a reading device that reads information on the product moved from the predetermined placing area to a predetermined reading range, and an operation key that receives a settlement operation for instructing settlement processing of the product, the checkout method comprising:
identifying the product on the basis of read information from the reading device;
executing sales registration processing on the identified product;
determining, in a case where the operation key receives the settlement operation, whether or not the product is in the predetermined placing area on the basis of detection information from the sensor; and
executing, in a case of determining that no product is in the predetermined placing area, the settlement processing on the product on which the sales registration processing is executed.
